# EUROPEAN PATENT SPECIFICATION

(11) **EP 0 385 313 B1**
(45) Date of publication and mention of the grant of the patent: **24.01.1996**
(21) Application number: 90103581.6
(22) Date of filing: 23.02.1990
(51) Int. Cl.: H02K 41/02

(54) **Apparatus for adjusting air gap in toroidal type linear motor**
Vorrichtung zur Luftspalteinrichtung eines linearen Ringmotors
Dispositif d'ajustage de l'entrefer d'un moteur linéaire toroidal

(30) Priority: 28.02.1989 JP 49723/89
(43) Date of publication of application: 05.09.1990
(73) Proprietor: OTIS ELEVATOR COMPANY, Farmington, CT 06032 (US)
(72) Inventor: Nakai, Keiichiro, Tokyo (JP); Nakanishi, Yoshinori, Sungu-Gun, Chiba Prefecture (JP)
(74) Representative: Klunker . Schmitt-Nilson . Hirsch

(56) References cited:
- EP-A- 0 033 184
- DD-A- 101 251
- DE-A- 1 920 171
- DE-B- 1 169 627
- DE-C- 1 130 512

## Description

The invention relates to an elevator comprising a toroidal type linear motor serving as its drive source,
(a) the linear motor including a stationary column and a movable element having a cylindrical through opening encompassing the column with an annular air gap therebetween, the movable element being movable up and down the column;
(b) a plurality of rotatable rollers being arranged at the top surface and the bottom surface of the movable element so as to engage the surface of the column.

Such an elevator is known.

Typically, the vertically extending column is fixed to a building and the moving element is incorporated in a counterweight unit to move vertically along the column. Sheaves are rotatably fixed to the upper portion of the building. Ropes which connect the counterweight unit and an elevator car are guided by the sheaves. While the elevator car moves upwardly and downwardly, substantially even magnetic forces between the column and the moving element maintain a predetermined air gap therebetween. However, when the elevator car is stopped, no magnetic force is exerted between the column and the moving element, so that the air gap may not be maintained. In addition, when an impact or vibration is applied to the column, the air gap may not be maintained. Therefore, with some of conventional elevators driven by a toroidal type linear motor, a plurality of rollers are rotatably fixed to the top and bottom surfaces of the moving element, and these rollers rotate and move on the column so as to maintain the predetermined air gap.

However, with such elevators, rotation of the rollers tends to cause noise as the car moves. In particular, since a column normally is formed of a plurality of connected sections, noise occurs as the rollers pass over the connecting joints of the column. Such noise may cause discomfort to elevator occupants.

It is therefore an object of the invention to provide an elevator having a toroidal type linear motor, with which the air gap between the column and the movable element is maintained, while noise is decreased as the moving element moves upwardly and downwardly.

According to a first aspect of the invention, the elevator is characterized by
(c) biasing means biasing the rollers towards the central axis of the column and allowing elastically confined changes of the air gap width between the column and the movable element.

According to a second aspect of the invention, the elevator is characterized by
(d) the rollers being elastic and allowing elastically confined changes of the air gap width between the column and the movable element.

When uneven magnetic force or no magnetic force is exerted between the column and the moving element, or when an impact or vibration is applied to the column, the rollers allow certain changes of the air gap width between the column and the movable element, but reduce these changes as compared to the situation without rollers being provided at the movable element. Rollers biased in the direction towards the column, or elastic rollers preferably made of synthetic resin decrease vibration of the column and noise produced by the rotation of the rollers when the elevator car moves upwardly and downwardly.

EP-A-0 033 184 discloses a mechanism for spring biassing lift guide rollers against the guides and DE-B-1 169 627 discloses an arrangement of rubber or air-filled rollers spring biassed against a guide.

Preferred embodiments of the invention will now be described, referring to the drawings.
**Fig. 1** is a schematic perspective view of an elevator driven by a linear motor;
**Fig. 2** is a view illustrating a first preferred embodiment, showing means for controlling the air gap width of the linear motor of the elevator of **Fig. 1**;
**Fig. 3** is a sectional view taken along III-III of **Fig. 2**;
**Fig. 4** is a view illustrating a second preferred embodiment, showing means for controlling the air gap width of the linear motor of the elevator of **Fig. 1**; and
**Fig. 5** is a sectional view taken along the line V-V of **Fig. 4**.

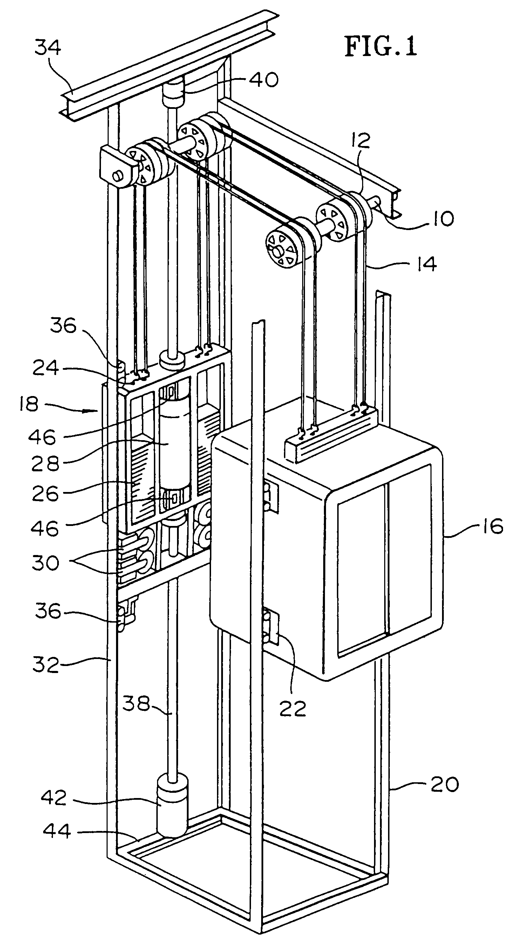

Fig. 1 schematically illustrates an elevator driven by a linear motor. As shown in Fig. 1, a pair of supporting shafts 10 are arranged on the upper portion of a building and extend in parallel to each other at a predetermined distance. Each of the supporting shafts 10 is provided with a pair of sheaves 12 which are arranged in parallel to each other and which are rotatably mounted on the supporting shaft 10. Four ropes 14 are guided by the sheaves 12. One end of each of the ropes 14 is connected to an elevator car 16, and the other end thereof is connected to a counterweight unit 18. When the elevator car 16 moved upwardly, the counterweight unit 18 moves downwardly and when the elevator car 16 moves downwardly, the counterweight unit 18 moves upwardly.

A pair of vertical guide rails 20 are fixed to the building on either side of the elevator in parallel to each other. The elevator car 16 is guided along the guide rails 20 via sliding members 22 or rollers provided on the side walls of the elevator car 16.

The counterweight unit 18 comprises a rectangular frame 24 and weights 26 supported on the frame 24. A moving element 28 and a braking device 30 are also supported on the frame 24. The total weight of the counterweight unit 18 including these parts is usually set to be 1.5 times the weight of the elevator car 16.

A pair of vertical guide rails 32 are disposed in parallel to each other on both sides of the counterweight unit. The top ends of the guide rails 32 are fixed to the building by means of a top supporting beam 34, and the bottom ends thereof are fixed to the building. Sliding members 36 or rollers are provided on two sides of the counterweight unit 18 to guide it along the guide rails 32.

A toroidal type linear motor which serves as a driving source of the elevator comprises an aluminium alloy column (stationary element) 38 serving as a secondary conductor, and the toroidal moving element 28 serving as a primary conductor.

The column 38 extends vertically. The top end of the column 36 is fixed to the top supporting beam 34 via a column supporting member 40. The bottom end of the column 38 is fixed to the building via a column supporting member 42 and a bottom support beam 44.

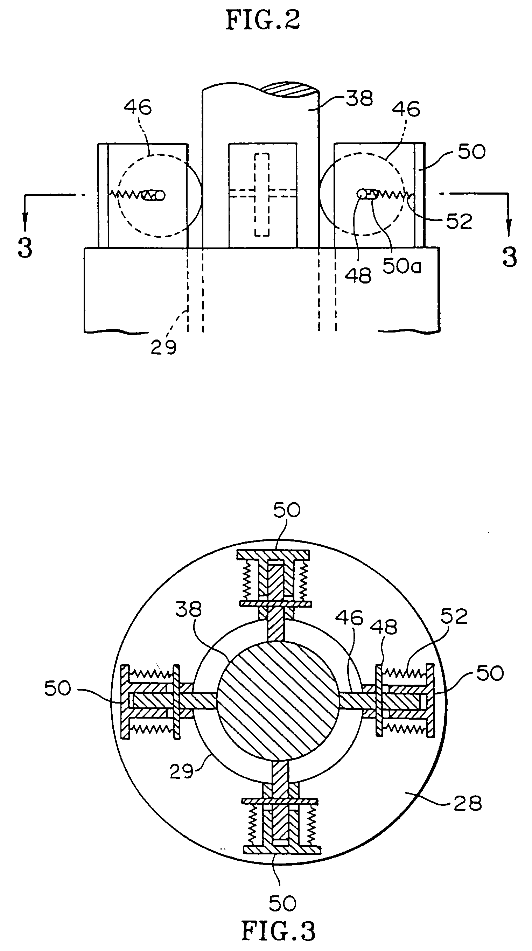

The moving element 28 has a cylindrical through opening which extends in the direction of the axis of the moving element 28 and receives the column 38 therein. As is well known in toroidal type linear motors, a predetermined annular air gap is formed between the stationary and moving elements due to magnetic force produced therebetween. As shown in Figs. 2 through 5, the moving element 28 is designed to move vertically while maintaining a predetermined air gap between the outer surface of the column 38 and the inner surface of the through opening of the moving element 28.

When a substantially even magnetic force is not exerted between the column 38 and the moving element 28 or when an impact or vibration is applied to the column 38, the moving element 28 may not be parallel to the column 38, so that the predetermined air gap may not be maintained. In order to maintain the predetermined air gap, four rollers 46 are provided on each of the top and bottom of the moving element 28.

According to the first embodiment of the invention, each of the rollers 46 is rotatably supported on a supporting shaft 48 which is supported on a supporting member 50 projecting from the top or bottom surface of the moving element 28. Each supporting member 50 comprises a pair of side Each supporting member 50 comprises a pair of side walls extending radially in parallel to each other, and a rear well extending perpendicularly to the side walls. The roller 46 is housed in a space formed by these walls. Each of the side walls is provided with an elongated opening 50a, and the supporting shaft 48 passes through the elongated openings 50a. A pair of springs 52 are provided between the supporting member 50 and the supporting shaft 48, so that the supporting shaft 48 and the roller 46 are biased by the springs 52 in a direction towards the central axis of the column 38.

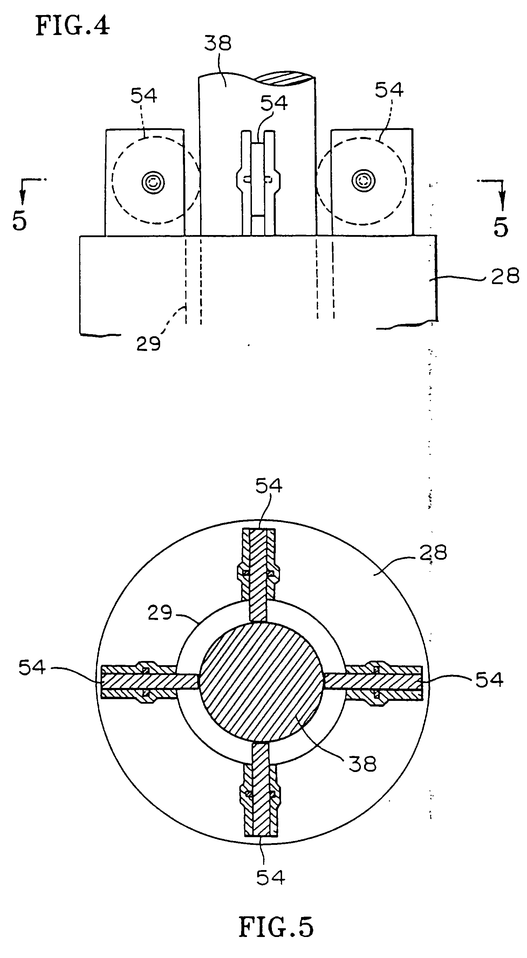

As a result, it is possible to decrease change of the air gap when no magnetic force is exerted between the moving element 28 and the column 38, or when an impact, vibration or the like is applied to the column, and to decrease vibration of the column and noise produced by rotation of the rollers 46 when the elevator car 16 moves upwardly and downwardly. Referring to Figs. 4 and 5, in the second embodiment, elastic rollers 54 made of synthetic resin are substituted for the rollers 46, and the elastic rollers 54 are not biased by springs. As a result, it is possible to obtain the same effects as, set forth above with regard to the first embodiment.

## Claims

1. An elevator comprising a toroidal type linear motor serving as its drive source,
(a) the linear motor including a stationary column (38) and a movable element (28) having a cylindrical through opening encompassing the column (38) with an annular air gap therebetween, the movable element being movable up and down the column;
(b) a plurality of rotatable rollers (46) being arranged at the top surface and the bottom surface of the movable element (28) so as to engage the surface of the column (38),
**characterized by**
(c) biasing means (52) biasing the rollers (46) towards the central axis of the column (38) and allowing elastically confined changes of the air gap width between the column (38) and the movable element (28).

2. The elevator of claim 1 wherein the biasing means comprise springs (52) biasing displaceable supporting shafts (48) of the rollers (46).

3. An elevator comprising a toroidal type linear motor serving as its drive source,
(a) the linear motor including a stationary column (38) and a movable element (28) having a cylindrical through opening encompassing the column (38) with an annular air gap therebetween, the movable element being movable up and down the column;
(b) a plurality of rotatable rollers (54) being arranged at the top surface and the bottom surface of the movable element (28) so as to engage the surface of the column (38),
**characterized by**
(c) the rollers (54) being elastic and allowing elastically confined changes of the air gap width between the column (38) and the movable element (28).

4. The elevator of claim 3 wherein the elastic rollers (54) are made of synthetic resin.

## Patentansprüche

1. Aufzug aufweisend einen als seine Antriebsquelle dienenden Linearmotor vom Toroidtyp,
(a) wobei der Linearmotor eine stationäre Säule (38) und ein bewegbares Element (28) aufweist, das eine zylinderförmige Durchgangsöffnung besitzt, die die Säule (38) mit einem ringförmigen Luftspalt dazwischen umgibt, und das die Säule aufwärts und abwärts bewegbar ist;
(b) mehrere drehbare Rollen (46), die an der Oberseite und der Unterseite des bewegbaren Elements (28) so angeordnet sind, daß sie mit der Oberfläche der Säule (38) zusammenwirken;
**gekennzeichnet durch**
(c) eine Vorspanneinrichtung (52), die die Rollen (46) in Richtung auf die Mittelachse der Säule (38) vorspannt und elastisch eingeschränkte Veränderungen der Luftspaltbreite zwischen der Säule (38) und dem bewegbaren Element (28) zuläßt.

2. Aufzug nach Anspruch 1, bei dem die Vorspanneinrichtung Federn (52) aufweist, die verlagerbare Abstützachsen (48) der Rollen (46) vorspannen.

3. Aufzug aufweisend einen als seine Antriebsquelle dienenden Linearmotor vom Toroidtyp,
(a) wobei der Linearmotor eine stationäre Säule (38) und ein bewegbares Element (28) aufweist, das eine die Säule (38) mit einem ringförmigen Luftspalt dazwischen umgebende zylinderförmige Durchgangsöffnung besitzt und die Säule aufwärts und abwärts bewegbar ist;
(b) mehrere drehbare Rollen (46), die an der Oberseite und der Unterseite des bewegbaren Elements (28) so angeordnet sind, daß sie mit der Oberfläche der Säule (38) zusammenwirken;
**dadurch gekennzeichnet**
(c) daß die Rollen (54) elastisch sind und elastisch begrenzte Veränderungen der Luftspaltbreite zwischen der Säule (38) und dem bewegbaren Element (28) zulassen.

4. Aufzug nach Anspruch 3, bei dem die elastischen Rollen (54) aus Kunstharz bestehen.

## Revendications

1. Ascenseur comprenant un moteur linéaire du type toroïdal en tant que source de force motrice,
(a) le moteur linéaire comprenant une colonne fixe (38) et un élément mobile (28) ayant une ouverture traversante cylindrique qui entoure la colonne (38) avec interposition d'un entrefer annulaire, l'élément mobile pouvant monter et descendre le long de la colonne,
(b) une pluralité de galets rotatifs (46) étant agencés au niveau de la surface supérieure et de la surface inférieure de l'élément mobile (28) pour coopérer avec la surface de la colonne (38),
caractérisé par
(c) des moyens de sollicitation (52) qui tendent à pousser les galets (46) vers l'axe central de la colonne (38) et qui admettent des variations élastiquement limitées de la largeur de l'entrefer entre la colonne (38) et l'élément mobile (28).

2. Ascenseur selon la revendication 1, dans lequel les moyens de sollicitation comprennent des ressorts (52) qui s'appliquent sur des arbres supports mobiles (48) des galets (46).

3. Ascenseur comprenant un moteur linéaire du type toroïdal en tant que source de force motrice,
(a) le moteur linéaire comprenant une colonne fixe (38) et un élément mobile (28) ayant une ouverture traversante cylindrique qui entoure la colonne (38) avec interposition d'un entrefer annulaire, l'élément mobile pouvant monter et descendre le long de la colonne,
(b) une pluralité de galets rotatifs (54) étant agencés au niveau de la surface supérieure et de la surface inférieure de l'élément mobile (28) pour coopérer avec la surface de la colonne (38),
caractérisé en ce que
(c) les galets (54) sont élastiques et admettent des variations élastiquement limitées de la largeur de l'entrefer entre la colonne (38) et l'élément mobile (28).

4. Ascenseur selon la revendication 3, dans lequel les galets élastiques (54) sont faits d'une résine synthétique.
